# EUROPEAN PATENT SPECIFICATION

(11) **EP 0 976 092 B1**
(45) Date of publication and mention of the grant of the patent: **13.08.2003**
(21) Application number: 98914210.4
(22) Date of filing: 01.04.1998
(51) Int. Cl.: G06K 9/20, G06F 17/24

(54) **METHOD AND ARRANGEMENT FOR AUTOMATIC DATA ACQUISITION OF FORMS**
VERFAHREN UND ANORDNUNG ZUR AUTOMATISCHEN FORMULARDATEN-ERFASSUNG
PROCEDE ET SYSTEME D'ACQUISITION AUTOMATIQUE DE DONNEES DE FORMULAIRES

(30) Priority: 01.04.1997 SE 9701183
(43) Date of publication of application: 02.02.2000
(73) Proprietor: Readsoft AB, 254 66 Helsingborg (SE)
(72) Inventor: ANDERSSON, Jan, S-260 40 Viken (SE)
(74) Representative: Onn, Thorsten
(86) International application number: SE9800602
(87) International publication number: WO98047098

(56) References cited:
- US-A- 4 933 979
- US-A- 5 140 650
- US-A- 5 293 429

## Description

### Technical field

The present invention refers to a method and arrangement for the automatic data acquisition, by means of a means for the same, of forms whose design and information is not known in advance, by input into the said means together with storage of patterns of the same.

### The prior art

It is a problem for companies, organisations and others to make good use of the information found in different types of paper forms, documents, etc.

With new, modern technology, these items can be scanned with a scanner and entered into a database via commercially available software programs. However, sorting, identification and other checking routines must to a large extent still be performed manually via the computer's display or screen.

For example, to store an invoice from one and the same company as one specifically designed document with a logotype and other visual elements, it must be revised so that its format is adapted to one that can be accepted by the software and then stored in a database. This and other procedures must be repeated each time an invoice with a new design is scanned with the software.

To identify an invoice from a company that is already registered, the whole invoice is often searched, which is time consuming. Certain software programs can have search routines that restrict the extent of this searching. It is, however, difficult to safeguard against blurred or hand-written lines of text, etc.

A need therefore exists for all who handle invoices and other forms to quickly be able to identify these and/or quickly be able to enter and store new patterns in their invoicing system.

Patent US-A-4 933 979 describes traditional data acquisition from forms and requires pre-defined templates/patterns with no self-learning (adaptive) ability. Predetermined stored frames of a form are utilized to identify the form.

Patent US-A-5 140 650 mentions data acquisition from forms with what is known as "Form out" technology to cover-over the original document and only retain the parts that are "filled-in". This data acquisition is often combined with data acquisition according to US-A-4 933 979. The patent does not have any adaptive function for data acquisition of unknown forms.

Another patent, US-A-5 293 429, concerns the classification of documents with the help of lines on the documents and does not directly concern data acquisition or any adaptive function for this. US-A-5 293 429 does not ensure the identification of lines with object areas (areas with text) and a "RCG-value" (ReCoGnition, a number that uniquely identifies a document).

None of the said patents generates a form map for a form unknown to the system according to the patent and stores the map in real time in a form database for recognition at the next opportunity for identification. For the inventions according to these patents, the unknown form must therefore be stored later by other means.

### Summary of the invention

One of the objectives of the present invention is to solve the problems named above as well as others during what is known as automatic data acquisition (interpretation) in connection with the handling of paper-based information.

The present invention concerns a system (method and arrangement) for the automatic data acquisition of forms where the system has no prior knowledge of what the form looks like or where on the form the information is to be found. In this way, templates of forms do not have to be defined in advance, but are instead registered as they are submitted to the system, i.e., in real time.

To accomplish the above objectives, the present invention specifies a method and arrangement for the automatic data acquisition, by means of a means for the same, of forms whose design and information is not known in advance, by input into the said means together with storage of patterns of the same. The method is adaptive, by which it includes learning and registering of forms as patterns without filled-in text, and by it also including the following steps for accomplishing the adaptive registration:
generation of a form map based on the in advance unknown form's design for identifying information contained on the form;
searching and comparing the form map with stored, registered maps in a means for storing form maps;
storing generated form maps in the storage means when they do not coincide with a stored map according to pre-determined limits for agreement;
indication of agreement according to the limits for agreement when agreement is found; and
continued data acquisition for identifying of the information content of the form.

According to one embodiment of the present invention, the form map can consist of an object area list with objects contained in the form whereby the object comprises colours and/or wholly or partly of text.

In an alternative embodiment, the form map constitutes a line map comprising objects in the form of coloured lines from the form.

Horizontal lines in the line map are used to produce a horizontal key by dividing the form into a pre-determined number of horizontal segments along the y-axis in a cartographic system of co-ordinates, whereby each segment is equivalent to a position in the horizontal key.

Vertical lines in the line map are used to produce a vertical key by dividing the form into a pre-determined number of vertical segments along the x-axis in a cartographic system of co-ordinates, whereby each segment is equivalent to a position in the vertical key.

At least one line element that is included in a segment is marked in the equivalent key position, and segments that lack line elements remain unmarked in the equivalent key position.

A horizontal key and/or a vertical key constitute a line key in the line map, whereby during the said searching, the line key generated is compared with line keys stored in the means for verifying agreement.

The line keys are sorted in the storage means according to the number of markings.

The object's horizontal position in the object area list is used to generate a horizontal key by dividing the form into a pre-determined number of horizontal segments along the y-axis in a cartographic system of co-ordinates, whereby each segment is equivalent to a position in the horizontal key.

The object's vertical position in the object area list is used to produce a vertical key by dividing the form into a pre-determined number of vertical segments along the x-axis in a cartographic system of co-ordinates, whereby each segment is equivalent to a position in the vertical key.

At least one object that is included in a segment is marked in the equivalent key position, and segments that lack objects remain unmarked in the equivalent key position.

A horizontal key and/or a vertical key constitute an object key in the object area list, whereby during the said searching, the object key generated is compared with object keys stored in the means for verifying agreement.

The object keys are preferably sorted in the storage means according to the number of markings.

Searching results in a pre-defined number of requested probable candidates for the currently searched form.

If needed, an operator can support manually the whole or parts of the adaptive registration or identification of the new form or registered forms respectively if several alternative candidates are found as probabilities according to a factor of merit.

Finally, the identity of the form is confirmed by the data acquisition of a RCG-value.

Furthermore, the present invention specifies a arrangement for performing the above method.

The arrangement carries out automated data acquisition, by means of a means for the same, of forms whose design and information is not known in advance, by input into the said arrangement together with storage of patterns of the same. It learns adaptively and registers the design of the form, and includes a computer with the following means for carrying out the adaptive registration:
means for generation of a form map based on the in advance unknown form's design for identifying information contained on the form;
means for searching and comparing the form map with stored, registered maps in a means for storing form maps;
means for storing generated form maps in the storage means when they do not coincide with a stored map according to pre-determined limits for agreement;
means for indicating agreement according to the limits for agreement when agreement is found; and
means for identification and continued data acquisition of the information content of the form.

In addition, the arrangement can include or constitute that specified according to the above method of the present invention, which is further illustrated in the accompanying non-independent claims for the arrangement.

### Brief description of the drawings

Further reference to the enclosed figures and associated text will give a clearer understanding of the present invention.
**Fig. 1** shows schematically how a line pattern is accomplished from a scanned-in invoice.
**Fig. 2** shows schematically a flow-path for scanning, identifying, interpreting and validating a form according to the present invention.

### Detailed description of preferred embodiments

In the continued description of the present invention, the forms are presented as invoices. However, the invention is not limited to invoice forms but also covers general documents containing text, figures, etc. as forms. Invoices are used here as an example of a form to exemplify the invention.

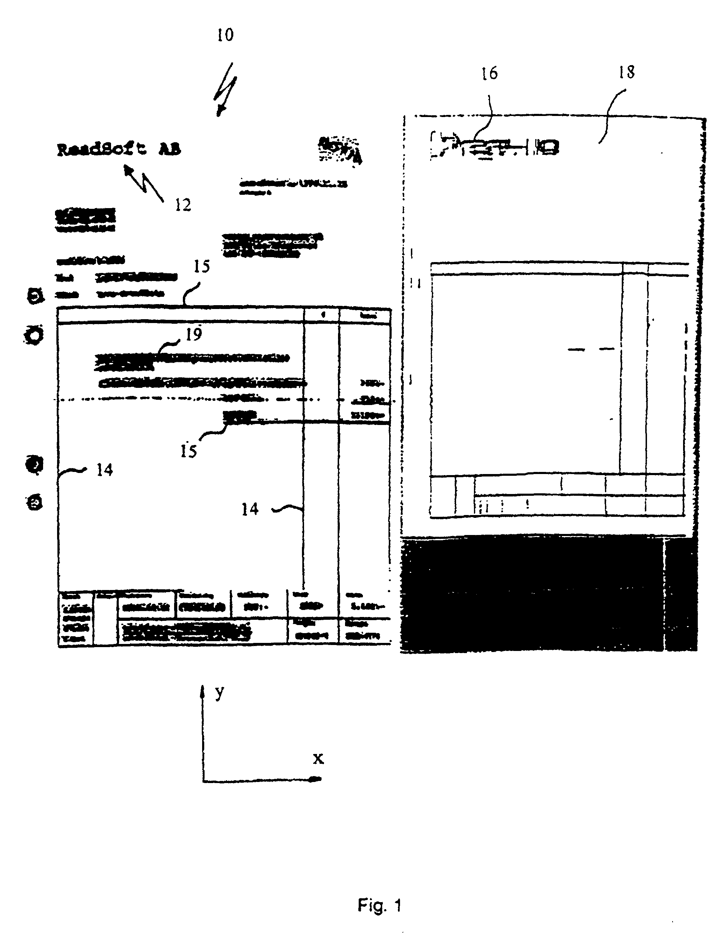

Fig. 1 illustrates schematically one part of invoice 10 that is scanned in a computer and that is shown on the display. As is evident from invoice 10, it is unclear or blurred after the scanning or input.

Invoice 10 consists partly of a logotype 12 and the vertical 14 and horizontal line 15 elements.

Note that even the logotype contains long black or varying degrees of shaded coloured line elements 16 that have been partly registered in a line map 18 according to the present invention, and that give an idea of what the original logotype 12 looked like, which simplifies identification when the invoice is an object to be identified as being as registered in a form map database. Coloured lines also include grey scales of black.

The form map that in this case constitutes line map 18 has been filtered from other objects 19, such as whole or parts of text objects or coloured objects, plus even the said line elements that include colour, which cannot be reproduced here, but that can be included as many coloured fields on a form 10.

An invoice 10 that is prepared according to the present invention, hereafter designated EH (Eyes & Hands), must be identified at an early stage. For successful identification, EH must have on a previous occasion, learned what the current invoice 10 looks like, which in simple terms means that information about the invoice is available in the form database in EH.

By necessity, the identification must be quick and be able to be made in a database that holds a very large number of invoice identities 18. It is not uncommon for databases to contain more than 10,000 identities 18.

The method and arrangement that EH uses does not require that an invoice is always put through a scanner in exactly the same way, i.e. the information on the invoice can vary somewhat in the x and y axes within a pre-determined measurement or threshold value. Fig. 1 shows a schematic cartographic system of co-ordinates.

In the present invention, (EH) comprises that in one embodiment, EH searches for all vertical 14 and horizontal line 15 elements of a pre-determined length on the invoice. Lines 14, 15 do not need to be free-standing and isolated, but can, for example, be part of a larger logotype text 12, such as ReadSoft AB in Fig. 1. The logotype 12 is represented as the line element 16 in line map 18.

The horizontal lines 15 and the vertical lines 14 constitute the basis for generating a horizontal key (h-key) and a vertical key (v-key) respectively according to the following:
* The invoice is divided into a large number of horizontal segments along the y-axis (not shown). Each segment is equivalent to one position in the h-key. If a certain segment includes one or more line elements 15, a mark or tag is placed in the equivalent key position. If not, an empty space, an inverted mark or anything else that differentiates itself from a mark is used instead.
* A v-key for the vertical line elements 14 is generated in a similar manner along the x-axis.
* The h and v-keys are given designations and together constitute a line key. Following this, a search is performed, which means that the current line key is compared with line keys for known invoices 10 that exist in EH's database. This comparison takes into account that individual lines or line elements 14, 15 can vary somewhat in position, plus that the total pattern of lines can be displaced somewhat according to suitable pre-determined values in the x and y directions, horizontally and vertically respectively.
* The line keys in the database are sorted according to the number of markings (tags), which are used to make the searching effective.
* The search results in a pre-determined number of probable candidates for the identity of the current invoice 10. All candidates are associated with a factor of merit or a probability that they are the current invoice 10.
* The identity of the invoice is finally confirmed by carrying out an interpretation of that known as the RCG-value (RCG- ReCoGnition). The RCG-value is a value at a given position that is unique for a certain invoice/supplier or other form. Examples of such values are bank giro numbers, post-office giro numbers, invoice numbers, total amounts, etc.

The said segments can, for example, form checked patterns that are fine-screened to varying extents according to the relative need for rapid searching.

The line keys can even be implemented on objects formed wholly or partly of text and colours. These are assigned line keys from an object area list that includes x and y-keys for the object. The object area list can, for example, consist of positions for certain selected objects. The principles for line maps stated above are even appropriate for objects other than line elements to accomplish identification of forms.

If the line keys are not found in the database, this indicates that the invoice is not known, which results in the new line keys being stored in the database that, in this way, is updated in real time.

If necessary, the operator can, via his computer, manually support the whole or part of the adaptive registration and/or identification of a new form or registered form respectively if several alternative candidates are presented as probable according to the factor of merit.

In addition, the present invention includes an arrangement for performing the method according to the above.

The arrangement performs the automatic data acquisition, by means of a means for the same, of forms whose design and information content is not known in advance, by input into the said means together with storage of patterns of the same. It registers in an adaptive manner and learns the design of forms, and includes a computer with the following means for accomplishing the adaptive registration:
means for generating a form map based on the in advance unknown form's design for identifying information contained on the form;
means for searching and comparing the form map with stored, recognised maps in a means for storing form maps;
means for storage of generated form maps in the storage means when they do not coincide with a stored map according to pre-determined limits for agreement;
means for indicating agreement according to the limits for agreement when agreement is found; and
means for identification and continued data acquisition of the information content of the form.

The said means are preferably controlled by computer hardware and software, such as, for example:
A scanner for acquisition of data.
An electronic storage medium (hard disk, CD-ROM, etc.) for the means to store information
Signs, icons, signal generators, etc. for indicating purposes.
Filters and comparitors so that the means can search and compare, as well as filters and registers for identification.

On the whole, the means used in the present invention are well known to a skilled person in the technical field, but the way in which they are co-ordinated to achieve the object of the invention is, however, innovative.

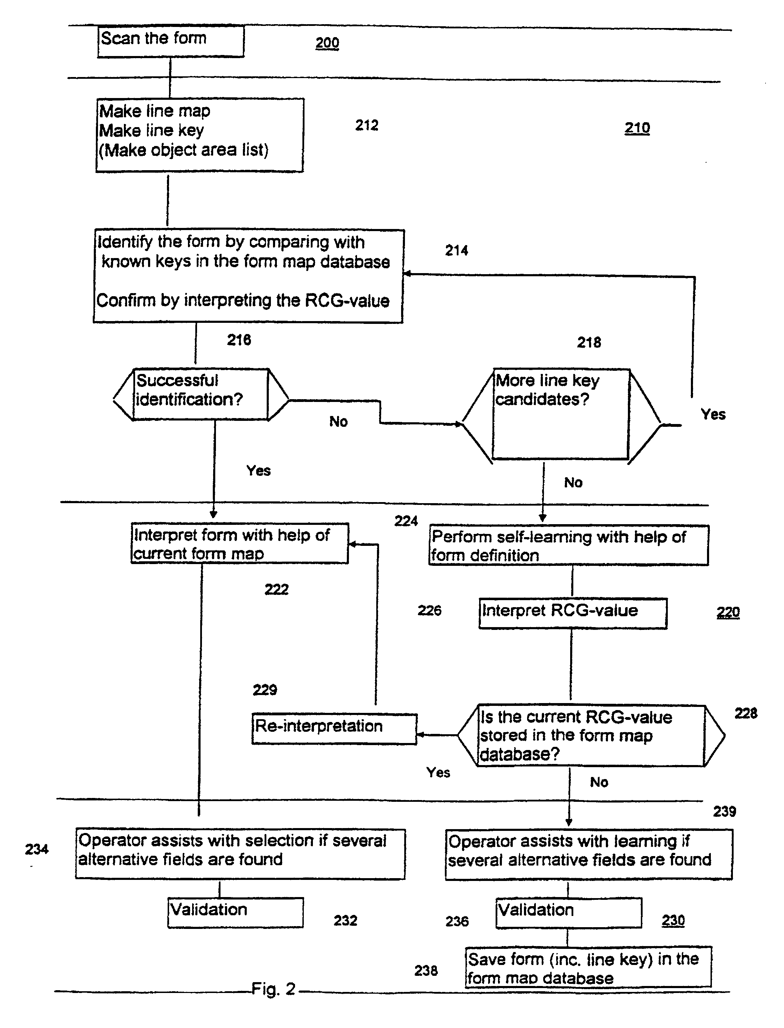

In one embodiment of the present invention with reference to Fig. 2, a schematic flow-path is illustrated to show the scanning, identification, interpretation, and validation of a form according to the present invention.

Fig. 2 is divided by dotted lines into partial areas to clarify the different steps in a method according to the invention, whereby the steps constitute the scanning of the form 200, identification of the form 210, interpretation of the form 220, plus validating the form 230.

The form is scanned 200 into EH, and identification 210 follows. Identification consists of generating a line map 212, or alternatively an object area list, whereby an line key is generated. Following this, form 10 is compared 214 with known keys in the form map database, whereby a conformation of identification is obtained via the RCG-value. The next step includes deciding whether the identification was successful 216 according to the conditions "Yes" or "No". If the decision results in "No", a conditional investigation is made to see if there are more candidates in the form of line keys 218. In the answer here is "Yes", a loop in the form of 214, 216 and 218 is performed until a successful identification is finally made, or until no further line key candidates are presented 218.

In the case of a successful identification, interpretation 220 of the form then begins by interpreting with the help of the current form map 222, after which validation 230 or evaluation 232 of the fields of the form 10 takes place. As an option, the operator can assist with selection if several alternative fields are found 234.

If the identification 210 is unsuccessful, and no further line keys are presented 218, interpretation 220 is performed in that self-learning with a form definition 224 is accomplished. The form definition consists of a template or a set of rules that describes the common elements of a specific collection of forms, for example, Swedish invoices. Following this, the RCG-value is interpreted 226 and a decision is made 228 whether the current RCG-value can be found in the form database. If the answer is "Yes", a re-interpretation begins 229, followed by a continued interpretation 222 that leads to validation 232.

If, on the other hand, the answer is "No", validation commences 230, 236, after which the form is saved in the form map database with the line key 238. Prior to steps 236, 238, the operator can, if several field alternatives are found, assist with the self-learning process.

The embodiments of the present invention described above are possible embodiments, but are not intended to limit the invention to such, as further embodiments will be evident to a skilled person in the technical area via the drafts of the enclosed claims.

## Claims

1. Method for the automatic data acquisition (200), by means of a means for the same, of forms (10) whose design and information content (19) is not known in advance, by input into the said means, together with storage of patterns of the same, whereby the method is adaptive (224) and includes self-learning and registration of the design of forms not defining templates of forms in advance, **characterised in that** it includes the following steps to accomplish the adaptive registration (238):
generation of a form map (18) based on the in advance unknown form's (10) design for identifying (210) information contained on the form;
searching and comparing (210, 220) the form map (18) with stored, registered maps in a means for storing form maps;
storage (238) of generated form maps (18) in the storage means when they do not coincide with a stored map according to pre-determined limits for agreement;
indication of agreement according to the limits for agreement when agreement is found; and
continued data acquisition (232) for identifying the information content of the form.

2. Method according to claim 1, **characterised in that** the form map (18) consists of an object area list with objects (19) contained in the form.

3. Method according to claim 2, **characterised in that** the object (19) comprises colours and/or wholly or partly of text.

4. Method according to claim 1, **characterised in that** the form map (18) constitutes a line map comprising line elements (14,15) from the form (10).

5. Method according to claim 4, **characterised in that** the horizontal lines (15) in the line map are used to generate a horizontal key by dividing the form into a pre-determined number of horizontal segments along the y-axis in a cartographic system of co-ordinates, whereby each segment is equivalent to a position in the horizontal key.

6. Method according to claims 4 and 5, **characterised in that** the vertical lines (14) in the line map are used to generate a vertical key by dividing the form (10) into a pre-determined number of vertical segments along the x-axis in a cartographic system of co-ordinates, whereby each segment is equivalent to a position in the vertical key.

7. Method according to claims 5 and 6, **characterised in that** at least one line element (14, 15) that is included in a segment is marked in the equivalent key position, and that segments that lack line elements remain unmarked in the equivalent key position.

8. Method according to claims 4-7, **characterised in that** the horizontal key and/or a vertical key constitute a line key in the line map (18), whereby, during the said searching, the line key generated is compared (214) with line keys stored in the storage means fo verifying agreement.

9. Method according to claim 8, **characterised in that** the line keys are sorted in the storage means according to the number of markings.

10. Method according to claims 1 and 2, **characterised in that** the object's horizontal position in the object area list is used to generate a horizontal key by dividing the form into a pre-determined number of horizontal segments along the y-axis in a cartographic system of co-ordinates, whereby each segment is equivalent to a position in the horizontal key.

11. Method according to claims 1 and 2, **characterised in that** the object's vertical position in the object area list is used to generate a vertical key by dividing the form into a pre-determined number of vertical segments along the x-axis in a cartographic system of co-ordinates, whereby each segment is equivalent to a position in the vertical key.

12. Method according to claims 10 and 11, **characterised in that** at least one object that is included in a segment is marked in the equivalent key position, and that segments that lack objects remain unmarked in the equivalent key position

13. Method according to claims 10-12, **characterised in that** a horizontal key and/or a vertical key constitute an object key in the object area list, whereby, during the said searching, the object key generated is compared with object keys stored in the storage means for verifying agreement.

14. Method according to claim 13, **characterised in that** the object keys are sorted in the storage means according to the number of markings.

15. Method according to claims 1-14, **characterised in that** the searching (210, 218) results in a pre-defined number of requested probable candidates for the currently searched form.

16. Method according to claims 1-15, **characterised in that** the identity of the form is confirmed by the data acquisition of a ReCoGnition (RCG) value (214) which uniquely identifies a form.

17. Arrangement for the automatic data acquisition, by means of a means for the same, of forms (10) whose design and information content (19) is not known in advance, by input into the said means together with storage of patterns of the same it learns adaptively and registers the design of forms (10) not defining templates of forms in advance, and includes a computer, **characterised by** the following means for carrying out the adaptive registration (238):
means for generating a form map (18) based on the in advance unknown form's (10) design for identifying information contained on the form;
means for searching and comparing the form map with stored, recognised maps in a means for storing form maps;
means for storage of generated form maps (18) in the storage means when they do not coincide with a stored map according to pre-determined limits for agreement;
means for indicating agreement according to the limits for agreement when agreement is found; and
means for identification and continued data acquisition of the information content of the form.

18. Arrangement according to claim 17 **characterised in that** the form map (18) consists of an object area list with objects (19) contained in the form (10).

19. Arrangement according to claim 18, **characterised in that** the object (19) comprises colours and/or wholly or partly of text.

20. Arrangement according to claim 17, **characterised in that** the form map (18) constitutes a line map comprising line elements (14, 15) from the form.

21. Arrangement according to claim 20, **characterised in that** the horizontal lines (15) in the line map are used to generate a horizontal key by dividing the form into a pre-determined number of horizontal segments along the y-axis in a cartographic system of co-ordinates, whereby each segment is equivalent to a position in the horizontal key.

22. Arrangement according to claims 20 and 21, **characterised in that** the vertical lines (14) in the line map are used to generate a vertical key by dividing the form into a pre-determined number of vertical segments along the x-axis in a cartographic system of co-ordinates, whereby each segment is equivalent to a position in the vertical key.

23. Arrangement according to claims 21 and 22, **characterised in that** at least one line element (14, 15) that is included in a segment is marked in the equivalent key position, and that segments that lack line elements remain unmarked in the equivalent key position.

24. Arrangement according to claims 21-23, **characterised in that** the horizontal key and/or a vertical key constitute a line *key* in the line map, whereby, during the said searching, the line key generated is compared with line keys stored in the storage means for verifying agreement.

25. Arrangement according to claim 24, **characterised in that** the line keys are sorted in the storage means according to the number of markings.

26. Arrangement according to claims 17 and 18, **characterised in that** the object's (19) horizontal position in the object area list is used to generate a horizontal key by dividing the form into a pre-determined number of horizontal segments along the y-axis in a cartographic system of co-ordinates, whereby each segment is equivalent to a position in the horizontal key.

27. Arrangement according to claims 17 and 18, **characterised in that** the object's (19) vertical position in the object area list is used to generate a vertical key by dividing the form into a pre-determined number of vertical segments along the x-axis in a cartographic system of co-ordinates, whereby each segment is equivalent to a position in the vertical key.

28. Arrangement according to claims 26 and 27, **characterised in that** at least one object that is included in a segment is marked in the equivalent key position, and that segments that lack objects remain unmarked in the equivalent key position.

29. Arrangement according to claims 26-28, **characterised in that** a horizontal key and/or a vertical key constitute an object key in the object area list, whereby, during the said searching, the object key generated is compared with object keys stored in the storage means for verifying agreement.

30. Arrangement according to claim 29, **characterised in that** the object keys are sorted in the storage means according to the number of markings.

31. Arrangement according to claims 17-30, **characterised in that** the searching results in a pre-defined number of requested probable candidates for the currently searched form.

32. Arrangement according to claims 17-31, **characterised in that** the identity of the form is confirmed by the data acquisition of a a ReCoGnition (RCG) value (214) which uniquely identifies a form.

## Patentansprüche

1. Verfahren zur automatischen Datenerfassung (200) durch ein Mittel zu diesem Zweck, aus Formularen (10), deren Gestaltung und Informationsgehalt (19) zum voraus nicht bekannt ist, durch Einlesen derselben in die genannten Mittel, verbunden mit dem Speichern von Mustern derselben, wobei das Verfahren adaptiv (224) ist und das selbsttätige Erlernen und die Registrierung der Gestaltung von Formularen beinhaltet, welche nicht zum voraus Formularvorlagen definieren, **dadurch gekennzeichnet, dass** es die folgenden Schritte zur Erzielung der adaptiven Registrierung umfasst:
Erzeugung eines Formularplans (18) auf der Grundlage der Gestaltung des zuvor unbekannten Formulars (10) zwecks Erkennung (210) der im Formular enthaltenen Informationen;
Suche und Vergleich (210, 220) des Formularplans (18) mit gespeicherten, registrierten Plänen in einem Mittel zum Speichern von Formularplänen;
Speicherung (238) von erzeugten Formularplänen (18) im Speichermittel, falls sie nicht gemäss vorgegebenen Übereinstimmungsgrenzen mit einem gespeicherten Formularplan zusammenfallen;
Anzeige der Übereinstimmung gemäss den Übereinstimmungsgrenzen, falls eine Übereinstimmung vorliegt; und
Weiterführung der Datenerfassung (232) zur Erkennung des Informationsgehalts des Formulars.

2. Verfahren nach Anspruch 1, **dadurch gekennzeichnet, dass** der Formularplan (18) aus einer Objektbereichsliste von im Formular enthaltenen Objekten (19) besteht.

3. Verfahren nach Anspruch 2, **dadurch gekennzeichnet, dass** das Objekt (19) aus Farben und/oder ganz oder teilweise aus Text besteht.

4. Verfahren nach Anspruch 1, **dadurch gekennzeichnet, dass** der Formularplan (18) einen Linienplan mit Linienelementen (14, 15) aus dem Formular (10) bildet.

5. Verfahren nach Anspruch 4, **dadurch gekennzeichnet, dass** die waagrechten Linien (15) im Linienplan benutzt werden, um einen waagrechten Schlüssel zu erzeugen, indem das Formular in einem kartographischen Koordinatensystem entlang der Y-Achse in eine bestimmte Anzahl waagrechte Segmente aufgeteilt wird, wobei jedes Segment einer Position im waagrechten Schlüssel entspricht.

6. Verfahren nach den Ansprüchen 4 und 5, **dadurch gekennzeichnet, dass** die senkrechten Linien (14) im Linienplan benutzt werden, um einen senkrechten Schlüssel zu erzeugen, indem das Formular (10) in einem kartographischen Koordinatensystem entlang der X-Achse in eine bestimmte Anzahl senkrechte Segmente aufgeteilt wird, wobei jedes Segment einer Position im senkrechten Schlüssel entspricht.

7. Verfahren nach den Ansprüchen 5 und 6, **dadurch gekennzeichnet, dass** mindestens ein Linienelement (14, 15), das zu einem Segment gehört, in der entsprechenden Schlüsselposition markiert wird, und dass Segmente ohne Linienelement in der entsprechenden Schlüsselposition unmarkiert bleiben.

8. Verfahren nach den Ansprüchen 4 bis 7, **dadurch gekennzeichnet, dass** der waagrechte und/oder der senkrechte Schlüssel einen Linienschlüssel im Linienplan (18) bilden, wobei der erzeugte Linienschlüssel während der genannten Suche mit im Speichermittel gespeicherten Linienschlüsseln verglichen wird (214), um eine Übereinstimmung zu überprüfen.

9. Verfahren nach Anspruch 8, **dadurch gekennzeichnet, dass** die Linienschlüssel im Speichermittel nach der Anzahl Markierungen sortiert sind.

10. Verfahren nach den Ansprüchen 1 und 2, **dadurch gekennzeichnet, dass** die waagrechte Position des Objekts in der Objektbereichsliste benutzt wird, um einen waagrechten Schlüssel zu erzeugen, indem das Formular in einem kartographischen Koordinatensystem entlang der Y-Achse in eine bestimmte Anzahl waagrechte Segmente aufgeteilt wird, wobei jedes Segment einer Position im waagrechten Schlüssel entspricht.

11. Verfahren nach den Ansprüchen 1 und 2, **dadurch gekennzeichnet, dass** die senkrechte Position des Objekts in der Objektbereichsliste benutzt wird, um einen senkrechten Schlüssel zu erzeugen, indem das Formular in einem kartographischen Koordinatensystem entlang der X-Achse in eine bestimmte Anzahl senkrechte Segmente aufgeteilt wird, wobei jedes Segment einer Position im senkrechten Schlüssel entspricht.

12. Verfahren nach den Ansprüchen 10 und 11, **dadurch gekennzeichnet, dass** mindestens ein Objekt, das zu einem Segment gehört, in der entsprechenden Schlüsselposition markiert wird, und dass Segmente ohne Objekt in der entsprechenden Schlüsselposition unmarkiert bleiben.

13. Verfahren nach den Ansprüchen 10 bis 12, **dadurch gekennzeichnet, dass** ein waagrechter und/oder senkrechter Schlüssel einen Objektschlüssel in der Objektbereichsliste (18) bilden, wobei der erzeugte Objektschlüssel während der genannten Suche mit im Speichermittel gespeicherten Objektschlüsseln verglichen wird, um eine Übereinstimmung zu überprüfen.

14. Verfahren nach Anspruch 13, **dadurch gekennzeichnet, dass** die Objektschlüssel im Speichermittel nach der Anzahl Markierungen sortiert sind.

15. Verfahren nach den Ansprüchen 1 bis 14, **dadurch gekennzeichnet, dass** die Suche (210, 218) eine vorbestimmte Anzahl angeforderter wahrscheinlicher Kandidaten für das gerade gesuchte Formular ergibt.

16. Verfahren nach den Ansprüchen 1 bis 15, **dadurch gekennzeichnet, dass** die Identität des Formulars durch die Datenerfassung eines Erkennungswerts (RCG) (214) bestätigt wird, der ein Formular eindeutig kennzeichnet.

17. Anordnung zur automatischen Datenerfassung durch ein Mittel zu diesem Zweck, aus Formularen (10), deren Gestaltung und Informationsgehalt (19) zum voraus nicht bekannt ist, durch Einlesen derselben in die genannten Mittel, verbunden mit dem Speichern von Mustern derselben, wobei die Anordnung adaptiv lernt und die Gestaltung von Formularen registriert, welche nicht zum voraus eine Formularvorlage definieren und einen Computer beinhaltet, **gekennzeichnet durch** die folgenden Mittel zur Durchführung der adaptiven Registrierung (238):
Mittel zur Erzeugung eines Formularplans (18) auf der Grundlage der Gestaltung des zuvor unbekannten Formulars (10) zwecks Erkennung der im Formular enthaltenen Informationen;
Mittel zum Suchen und Vergleichen des Formularplans mit gespeicherten, erkannten Plänen in einem Mittel zum Speichern von Formularplänen;
Mittel zum Speichern (238) erzeugter Formularpläne (18) im Speichermittel, falls sie nicht gemäss vorgegebenen Übereinstimmungsgrenzen mit einem gespeicherten Formularplan zusammenfallen;
Mittel zur Anzeige der Übereinstimmung gemäss den Übereinstimmungsgrenzen, falls eine Übereinstimmung vorliegt; und
Mittel zur Erkennung und zur weiterführenden Datenerfassung (232) des Informationsgehalts des Formulars.

18. Anordnung nach Anspruch 17, **dadurch gekennzeichnet, dass** der Formularplan (18) aus einer Objektbereichsliste von im Formular (10) enthaltenen Objekten (19) besteht.

19. Anordnung nach Anspruch 18, **dadurch gekennzeichnet, dass** das Objekt (19) aus Farben und/oder ganz oder teilweise aus Text besteht.

20. Anordnung nach Anspruch 17, **dadurch gekennzeichnet, dass** der Formularplan (18) einen Linienplan mit Linienelementen (14, 15) aus dem Formular bildet.

21. Anordnung nach Anspruch 20, **dadurch gekennzeichnet, dass** die waagrechten Linien (15) im Linienplan benutzt werden, um einen waagrechten Schlüssel zu erzeugen, indem das Formular in einem kartographischen Koordinatensystem entlang der Y-Achse in eine bestimmte Anzahl waagrechte Segmente aufgeteilt wird, wobei jedes Segment einer Position im waagrechten Schlüssel entspricht.

22. Anordnung nach den Ansprüchen 20 und 21, **dadurch gekennzeichnet, dass** die senkrechten Linien (14) im Linienplan benutzt werden, um einen senkrechten Schlüssel zu erzeugen, indem das Formular in einem kartographischen Koordinatensystem entlang der X-Achse in eine bestimmte Anzahl senkrechte Segmente aufgeteilt wird, wobei jedes Segment einer Position im senkrechten Schlüssel entspricht.

23. Anordnung nach den Ansprüchen 21 und 22, **dadurch gekennzeichnet, dass** mindestens ein Linienelement (14, 15), das zu einem Segment gehört, in der entsprechenden Schlüsselposition markiert wird, und dass Segmente ohne Linienelement in der entsprechenden Schlüsselposition unmarkiert bleiben.

24. Anordnung nach den Ansprüchen 21 bis 23, **dadurch gekennzeichnet, dass** der waagrechte und/oder der senkrechte Schlüssel einen Linienschlüssel im Linienplan bilden, wobei der erzeugte Linienschlüssel während der genannten Suche mit im Speichermittel gespeicherten Linienschlüsseln verglichen wird, um eine Übereinstimmung zu überprüfen.

25. Anordnung nach Anspruch 24, **dadurch gekennzeichnet, dass** die Linienschlüssel im Speichermittel nach der Anzahl Markierungen sortiert sind.

26. Anordnung nach den Ansprüchen 17 und 18, **dadurch gekennzeichnet, dass** die waagrechte Position des Objekts (19) in der Objektbereichsliste benutzt wird, um einen waagrechten Schlüssel zu erzeugen, indem das Formular in einem kartographischen Koordinatensystem entlang der Y-Achse in eine bestimmte Anzahl waagrechte Segmente aufgeteilt wird, wobei jedes Segment einer Position im waagrechten Schlüssel entspricht.

27. Anordnung nach den Ansprüchen 17 und 18, **dadurch gekennzeichnet, dass** die senkrechte Position des Objekts (19) in der Objektbereichsliste benutzt wird, um einen senkrechten Schlüssel zu erzeugen, indem das Formular in einem kartographischen Koordinatensystem entlang der X-Achse in eine bestimmte Anzahl senkrechte Segmente aufgeteilt wird, wobei jedes Segment einer Position im senkrechten Schlüssel entspricht.

28. Anordnung nach den Ansprüchen 26 und 27, **dadurch gekennzeichnet, dass** mindestens ein Objekt, das zu einem Segment gehört, in der entsprechenden Schlüsselposition markiert wird, und dass Segmente ohne Objekt in der entsprechenden Schlüsselposition unmarkiert bleiben.

29. Anordnung nach den Ansprüchen 26 bis 28, **dadurch gekennzeichnet, dass** ein waagrechter und/oder ein senkrechter Schlüssel einen Objektschlüssel in der Objektbereichsliste (18) bilden, wobei der erzeugte Objektschlüssel während der genannten Suche mit im Speichermittel gespeicherten Objektschlüsseln verglichen wird, um eine Übereinstimmung zu überprüfen.

30. Anordnung nach Anspruch 29, **dadurch gekennzeichnet, dass** die Objektschlüssel im Speichermittel nach der Anzahl Markierungen sortiert sind.

31. Anordnung nach den Ansprüchen 17 bis 30, **dadurch gekennzeichnet, dass** die Suche eine vorbestimmte Anzahl angeforderter wahrscheinlicher Kandidaten für das gerade gesuchte Formular ergibt.

32. Anordnung nach den Ansprüchen 17 bis 31, **dadurch gekennzeichnet, dass** die Identität des Formulars durch die Datenerfassung eines Erkennungswerts (RCG) (214) bestätigt wird, der ein Formular eindeutig kennzeichnet.

## Revendications

1. Procédé d'acquisition (200) automatique de données, au moyen d'un moyen à cet effet, de formulaires (10) dont la structure et le contenu en information (19) ne sont pas connus à l'avance, par la saisie de ceux-ci dans lesdits moyens, conjointement avec la mémorisation de configurations y relatives, le procédé étant adaptatif (224) et comprenant l'auto-apprentissage et l'enregistrement de la structure de formulaires ne définissant pas des modèles de formulaires à l'avance, **caractérisé en ce qu'**il comprend les étapes suivantes pour accomplir l'enregistrement adaptatif (238):
génération d'un schéma (18) du formulaire sur la base de la structure auparavant inconnue du formulaire (10) aux fins d'identification (210) d'informations contenues sur le formulaire;
recherche et comparaison (210, 220) du schéma (18) du formulaire avec des schémas enregistrés et mémorisés dans un moyen de mémoire de schémas de formulaires;
mémorisation (238) des schémas (18) de formulaires générés dans le moyen de mémorisation lorsqu'ils ne coïncident pas avec un schéma mémorisé selon des limites prédéterminées de concordance;
indication de la concordance selon les limites de concordance lorsqu'une concordance est trouvée; et
poursuite de l'acquisition (232) de données afin d'identifier le contenu en information du formulaire.

2. Procédé selon la revendication 1, **caractérisé en ce que** le schéma (18) du formulaire consiste en une liste de zones d'objets avec des objets (19) contenus dans le formulaire.

3. Procédé selon la revendication 2, **caractérisé en ce que** l'objet (19) consiste en couleurs et/ou entièrement ou partiellement en texte.

4. Procédé selon la revendication 1, **caractérisé en ce que** le schéma (18) du formulaire constitue un schéma de lignes comprenant des éléments linéaires (14, 15) du formulaire (10).

5. Procédé selon la revendication 4, **caractérisé en ce que** les lignes horizontales (15) dans le schéma de lignes sont utilisées pour générer une clé horizontale en divisant le formulaire en un nombre prédéterminé de segments horizontaux le long de l'axe y d'un système cartographique de coordonnées, chaque segment équivalant à une position dans la clé horizontale.

6. Procédé selon les revendications 4 et 5, **caractérisé en ce que** les lignes verticales (14) dans le schéma de lignes sont utilisées pour générer une clé verticale en divisant le formulaire (10) en un nombre prédéterminé de segments verticaux le long de l'axe x d'un système cartographique de coordonnées, chaque segment équivalant à une position dans la clé verticale.

7. Procédé selon les revendications 5 et 6, **caractérisé en ce qu'**au moins un élément linéaire (14, 15) contenu dans un segment est marqué dans la position équivalente de la clé, et que des segments sans éléments linéaires ne sont pas marqués dans la position équivalente de la clé.

8. Procédé selon les revendications 4 à 7, **caractérisé en ce que** la clé horizontale et/ou une clé verticale constituent une clé linéaire dans le schéma (18) de lignes, ladite clé linéaire générée étant comparée dans ladite recherche avec des clés linéaires mémorisées dans les moyens de mémoire en vérifiant une concordance.

9. Procédé selon la revendication 8, **caractérisé en ce que** les clés linéaires sont classées dans le moyen de mémoire selon le nombre de marquages.

10. Procédé selon les revendications 1 et 2, **caractérisé en ce que** la position horizontale de l'objet dans ladite liste de zones d'objets est utilisée pour générer une clé horizontale en divisant le formulaire en un nombre prédéterminé de segments horizontaux le long de l'axe y d'un système cartographique de coordonnées, chaque segment équivalant à une position dans la clé horizontale.

11. Procédé selon les revendications 1 et 2, **caractérisé en ce que** la position verticale de l'objet dans la liste de zones d'objets est utilisée pour générer une clé verticale en divisant le formulaire (10) en un nombre prédéterminé de segments verticaux le long de l'axe x d'un système cartographique de coordonnées, chaque segment équivalant à une position dans la clé verticale.

12. Procédé selon les revendications 10 et 11, **caractérisé en ce qu'**au moins un objet contenu dans un segment est marqué dans la position équivalente de la clé, et que des segments sans objets ne sont pas marqués dans la position équivalente de la clé.

13. Procédé selon les revendications 10 à 12, **caractérisé en ce qu'**une clé horizontale et/ou une clé verticale constituent une clé d'objet dans la liste de zones d'objets, ladite clé d'objet générée étant comparée dans ladite recherche avec des clés d'objets mémorisées dans les moyens de mémoire en vérifiant une concordance.

14. Procédé selon la revendication 13, **caractérisé en ce que** les clés d'objets sont classées dans le moyen de mémoire selon le nombre de marquages.

15. Procédé selon les revendications 1 à 14, **caractérisé en ce que** ladite recherche (210, 218) fournit un nombre prédéfini de candidats probables sollicités pour le formulaire actuellement recherché.

16. Procédé selon les revendications 1 à 15, **caractérisé en ce que** l'identité du formulaire est confirmée par l'acquisition des données d'une valeur (214) de reconnaissance (RCG) qui identifie univoquement un formulaire.

17. Dispositif pour l'acquisition automatique de données, au moyen d'un moyen à cet effet, de formulaires (10) dont la structure et le contenu en information (19) ne sont pas connus à l'avance, par la saisie de ceux-ci dans lesdits moyens, conjointement avec la mémorisation de configurations y relatifs, le dispositif apprenant de manière adaptative et enregistrant la structure de formulaires ne définissant pas des modèles de formulaires à l'avance, et comprenant un ordinateur, **caractérisé par** les moyens suivants pour la mise en oeuvre de l'enregistrement adaptatif (238):
moyens de génération d'un schéma (18) du formulaire sur la base de la structure auparavant inconnue du formulaire (10) aux fins d'identification (210) d'informations contenues sur le formulaire;
moyens de recherche et de comparaison (210, 220) du schéma (18) du formulaire avec des schémas enregistrés et mémorisés dans un moyen de mémoire de schémas de formulaires;
moyens de mémorisation des schémas (18) de formulaires générés dans le moyen de mémorisation lorsqu'ils ne coïncident pas avec un schéma mémorisé selon des limites prédéterminées de concordance;
moyens d'indication de la concordance selon les limites de concordance lorsqu'une concordance est trouvée; et
moyens d'identification et d'acquisition (232) continuée des données relatives au contenu en information du formulaire.

18. Dispositif selon la revendication 17, **caractérisé en ce que** le schéma (18) du formulaire consiste en une liste de zones d'objets avec des objets (19) contenus dans le formulaire (10).

19. Dispositif selon la revendication 18, **caractérisé en ce que** l'objet (19) consiste en couleurs et/ou entièrement ou partiellement en texte.

20. Dispositif selon la revendication 17, **caractérisé en ce que** le schéma (18) du formulaire constitue un schéma de lignes comprenant des éléments linéaires (14, 15) du formulaire (10).

21. Dispositif selon la revendication 20, **caractérisé en ce que** les lignes horizontales (15) dans le schéma de lignes sont utilisées pour générer une clé horizontale en divisant le formulaire en un nombre prédéterminé de segments horizontaux le long de l'axe y d'un système cartographique de coordonnées, chaque segment équivalant à une position dans la clé horizontale.

22. Dispositif selon les revendications 20 et 21, **caractérisé en ce que** les lignes verticales (14) dans le schéma de lignes sont utilisées pour générer une clé verticale en divisant le formulaire en un nombre prédéterminé de segments verticaux le long de l'axe x d'un système cartographique de coordonnées, chaque segment équivalant à une position dans la clé verticale.

23. Dispositif selon les revendications 21 et 22, **caractérisé en ce qu'**au moins un élément linéaire (14, 15) contenu dans un segment est marqué dans la position équivalente de la clé, et que des segments sans éléments linéaires ne sont pas marqués dans la position équivalente de la clé.

24. Dispositif selon les revendications 21 à 23, **caractérisé en ce que** la clé horizontale et/ou une clé verticale constituent une clé linéaire dans le schéma de lignes, ladite clé linéaire générée étant comparée dans ladite recherche avec des clés linéaires mémorisées dans les moyens de mémoire en vérifiant une concordance.

25. Dispositif selon la revendication 24, **caractérisé en ce que** les clés linéaires sont classées dans le moyen de mémoire selon le nombre de marquages.

26. Dispositif selon les revendications 17 et 18, **caractérisé en ce que** la position horizontale de l'objet (19) dans ladite liste de zones d'objets est utilisée pour générer une clé horizontale en divisant le formulaire en un nombre prédéterminé de segments horizontaux le long de l'axe y d'un système cartographique de coordonnées, chaque segment équivalant à une position dans la clé horizontale.

27. Dispositif selon les revendications 17 et 18, **caractérisé en ce que** la position verticale de l'objet (19) dans la liste de zones d'objets est utilisée pour générer une clé verticale en divisant le formulaire (10) en un nombre prédéterminé de segments verticaux le long de l'axe x d'un système cartographique de coordonnées, chaque segment équivalant à une position dans la clé verticale.

28. Dispositif selon les revendications 26 et 27, **caractérisé en ce qu'**au moins un objet contenu dans un segment est marqué dans la position équivalente de la clé, et que des segments sans objets ne sont pas marqués dans la position équivalente de la clé.

29. Dispositif selon les revendications 26 à 28, **caractérisé en ce qu'**une clé horizontale et/ou une clé verticale constituent une clé d'objet dans la liste de zones d'objets, ladite clé d'objet générée étant comparée dans ladite recherche avec des clés d'objets mémorisées dans les moyens de mémoire en vérifiant une concordance.

30. Dispositif selon la revendication 29, **caractérisé en ce que** les clés d'objets sont classées dans le moyen de mémoire selon le nombre de marquages.

31. Dispositif selon les revendications 17 à 30, **caractérisé en ce que** ladite recherche fournit un nombre prédéfini de candidats probables sollicités pour le formulaire actuellement recherché.

32. Dispositif selon les revendications 17 à 31, **caractérisé en ce que** l'identité du formulaire est confirmée par l'acquisition des données d'une valeur (214) de reconnaissance (RCG) qui identifie univoquement un formulaire.
